# EUROPEAN PATENT SPECIFICATION

(11) **EP 0 930 614 B1**
(45) Date of publication and mention of the grant of the patent: **31.03.2004**
(21) Application number: 99200856.5
(22) Date of filing: 25.11.1992
(51) Int. Cl.: G11B 20/00, G11B 7/007, G11B 7/013

(54) **Closed information system with physical copy protection**
Geschlossenes Informationssystem mit Kopierschutz
Système d'information fermé avec protection de copie

(30) Priority: 02.12.1991 EP 91203147
(43) Date of publication of application: 21.07.1999
(62) Divisional of application: 92203643.9
(73) Proprietor: Koninklijke Philips Electronics N.V., 5621 BA Eindhoven (NL)
(72) Inventor: Timmermans,Jozef Maria Karel, 5656 AA Eindhoven (NL); Schylander,Erik Christian, 5656 AA Eindhoven (NL); Mons, Johannes Jan, 5656 AA Eindhoven (NL)
(74) Representative: Visser, Derk

(56) References cited:
- EP-A- 0 299 573
- EP-A- 0 342 748
- EP-A- 0 404 249
- US-A- 4 849 836
- PATENT ABSTRACTS OF JAPAN vol. 10, no. 312 (P-509) [2368], 23 October 1986 & JP 61 123026 A (MATSUSHITA), 10 June 1986
- PATENT ABSTRACTS OF JAPAN vol. 10, no. 389 (P-531), 26 December 1986 & JP 61 178732 A (MATSUSHITA), 11 August 1986

## Description

The invention relates to a playback apparatus for recovering information from a record carrier, the record carrier exhibiting first variations of a first physical parameter of the record carrier, said first variations corresponding to information recorded on the record carrier and second variations of a second physical parameter of the record carrier, said second physical parameter differing from said first physical parameter, the apparatus comprising a transducer for scanning the record carrier and outputting a detection signal that exhibits first signal variations in dependence on said first variations and second signal variations in response to said second variations, recovery means for recovering the information from said first signal variations, and detection means for detecting the second variations of the second physical parameter on the basis of the second signal variations at a frequency spectrum which is located outside the frequency spectrum of the first signal variations.

The invention further relates to a record carrier.

An apparatus and record carrier of the type mentioned above is known from EP-A-299573, which discloses an information recording system comprising a recording device and a record carrier on which information may be recorded in a track in the form of optical detectable marks, which track exhibits a prerecorded track undulation, which undulation is modulated by a position-information signal. During recording the modulation is detected and the position-information is recovered for indicating the track portion in which the information is recorded.

Further the Compact-Disc system is well known. Normal Compact Discs play on all compatible playback apparatuses. Nowadays recording apparatus are available for copying the information present on a read-only Compact Disc on a recordable disc which can be played on the compatible play-back apparatus.

However some applications , for example audio-visual games, require a so-called "closed system" in which the Compact Disc with the software representing the audio-visual game can only be played on special players and which cannot be copied easily by means of the available recording apparatuses.

In the view of cost price aspects it is desired that know-how of the already existing information systems can be used as much as possible. Therefor it is desired to amend existing information systems as less as possible in order to realize a low-cost "closed information system".

However it should be made very difficult for third parties to copy such special discs by means of existing copying machines.
The prior art protection schemes do not meet this requirement, e.g.
- rate scrambling/encryption can by copied from disc to disc with a bit copying machine;
- special logical errors (to copy protect) in a main and/or subcode channel (of e.g. a Compact Disc) can also be copied with a bit copying machine;
- schemes relying on the relation main/subcode channel can also be copied with a bit copying machine.

Further JP-A-61 123026 describes a type of copy protection, in which an apparatus discriminates between two types of pits recorded on a record carrier, i.e. true pits representing information and dummy pits, all pits being formed by depth variations and dummy pits having other depths than true pits, which apparatus deforms the output signal when the dummy pit does not exist in a position where it should exist.

An object of the invention is to provide a closed information system in which record carriers are used which can be copied less easily.

According to the invention this object is achieved by a playback apparatus as defined in claim 1, with a record carrier as defined in claim 11.

Due to the fact that a bit copying machine usually only copies the variations of the first physical parameter (which variations represent the information recorded) the variations in the second physical parameter are not copied. Consequently the record carrier according to the invention cannot be copied by the usual type of bit copying machines. Further recordable discs may have variations of the second parameter used for indicating recording control information, and detection of such variations results in no recovery of the copied information.

An embodiment of the playback apparatus is characterized in that the second variations exhibit a modulation pattern representing a code, that the detection means comprises code recovery means for recovering the said code from the detection signal and means for activating the enabling means in response to the recovery of said code.

The use of a modulation of the variations has the advantage that the presence of the variations of the second physical parameter can be detected more reliably.

An further embodiment of the playback apparatus is characterized in that the information recorded is of a type which is recoverable by means of a predetermined data processing, the code represented by the modulation pattern of the second variations indicating the type of data processing to be used for recovering the information, the apparatus being provided with means for setting the recovery means in a mode in which the predetermined data processing indicated by the code recovered is performed.

This embodiment has the advantage that for recovering the information read from the record carrier it is required that the code represented by the modulation pattern is available. So the information can only be recorded by a dedicated play back apparatus, which is able to recover the code. In the event that the information is encrypted or scrambled before it is recorded on the record carrier the code preferably indicate the encryption key or the scramble method respectively.

Although not limited to information system in which optically readable record carrier are used, the system is in particular suitable for this type of information systems.

In an optical record carrier it is relatively simple to provide the track in which the information has been recorded with a track modulation which can be detected by the same radiation beam as used for reading the information.

An embodiment of the information system in which this is realized, is characterized in that the playback apparatus comprises servo control means for controlling the scanning in order to control at least one scanning parameter to a predetermined value on the basis of a detection signal received from the radiation sensitive detector and which is affected by said second physical parameter, which servo control means having a predetermined frequency bandwidth, said variations of said second physical parameter cause variations in the detection signal which exhibit a frequency spectrum which is located outside the bandwidth of servo control means.

The variations in the second physical parameter can be in the form of variations in the track position in a direction transverse to the track direction. These variations can be detected on the basis of the tracking error signal.

The variations in the second physical parameter can be in the form of variations in the position of the plane in which the optically readable marks are located. In that event the variations can be detected on the basis of the focus error signal.

The variations in the second physical parameter can also be in the form of variations in the mean value of the optical readable marks and the intermediate areas located between the optically readable marks. In that event the variations in the second physical parameter can be detected on the basis of variations in the data clock signal recovered during the scanning of the track with a constant linear velocity.

In the event that the record carrier used in the information system is a Compact Disc it is preferred to use an information system which is characterized in that the variations in the second physical parameter result in a variation in the detection signal with a frequency substantially corresponding to 22 kHz in the event that the track is scanned with a scanning speed between 1.2 to 1.4 meter per second.

This embodiment has the advantage that it is impossible to copy the special disc on an usual recordable Compact Disc which is provided with a pregroove which exhibits a wobble which results in a tracking error with a frequency of substantial 22 kHz when the pregroove is scanned with a velocity between 1.2 and 1.4 meter per second.

Even in the event that it succeeds to record a wobbling pattern of recording marks which corresponds to the wobbling recording marks of the record carrier to be copied, this pattern will not be detectable because of the presence of the wobbling pregroove which is situated in the same frequency range.

Embodiments of the invention will now be described in more detail, by way of example, with reference to Figures 1 to 9, wherein
Figures 1, 2 and 3 show embodiments of record carriers for use in the information system according to the invention,
Figures 4 and 5 show embodiments of the information system according to the invention,
Figure 6 show the positions of the frequency spectra of different signals with respect to one another, and
Figures 7, 8 and 9 show embodiments of detection circuits for use in the information system as shown in figure 5.

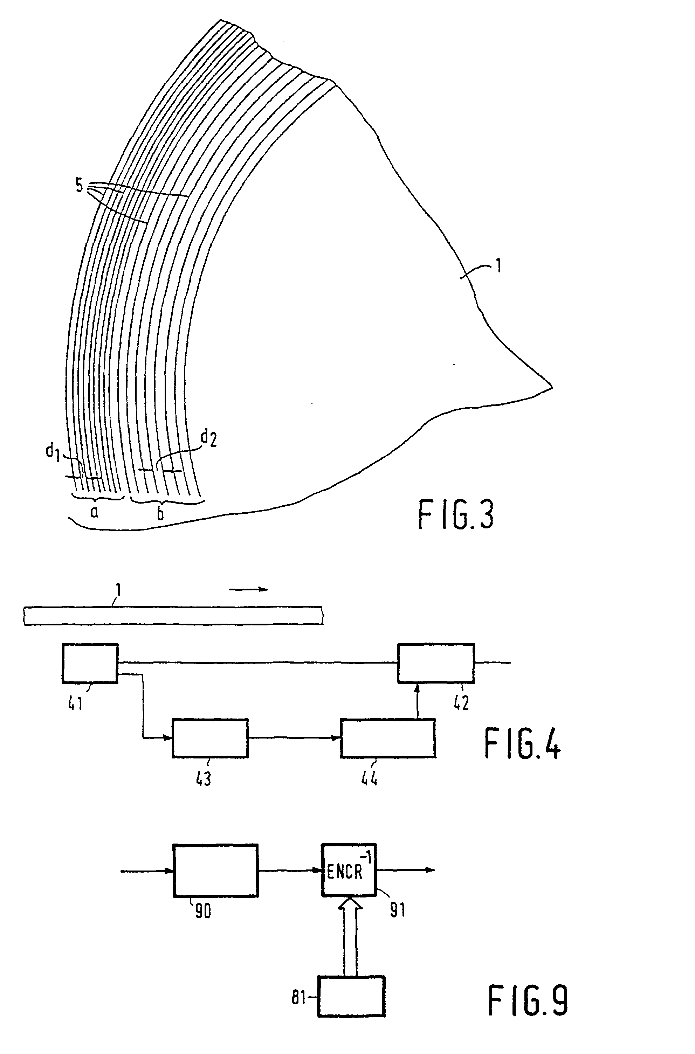

Figure 4 shows an embodiment of the information system in accordance of the invention. The information system comprises means (not shown) to move a record carrier 1 along a transducer 41, so as to cause a scanning of the record carrier 1. The record carrier exhibits variations of a first physical parameter, which variations represent information recorded on the record carrier 1. The transducer 41 is of a type that is responsive to said variations in said first physical parameters. An information recovery circuit 42 is coupled to an output of the transducer 41 for receiving a detection signal corresponding with the variations of the first physical parameter on the scanned part of the record carrier 41. The information recovery circuit is of an usual type that recovers the information from the said detection signal received.

The record carrier 1 further exhibits variations of a second physical parameter, which does not represent the information represented by the variations of the first physical parameters. Which second variations, however are also detectable by the transducer 41. The transducer supplies to a detection circuit 43 a signal corresponding with the variations in the second physical parameters detected by the transducer 41. The detection circuit 43 supplies to a control circuit 44 a control signal indicating whether the detection signal received comprises signal parts which corresponds with predetermined variations of the second physical parameter. In response to the receipt of a control signal indicating that the detection signal comprises parts corresponding to said predetermined variations the control circuit 44 supplies to the information recovery circuit 42 an enabling signal for enabling the information recovery. So only in the event that the presence of said variations in said second physical parameter is detected the information recorded on the disc will be recovered. The information recorded on a copy of the record carrier, which copy only exhibits the variations in the first physical parameter, representing the information, can not be recovered.

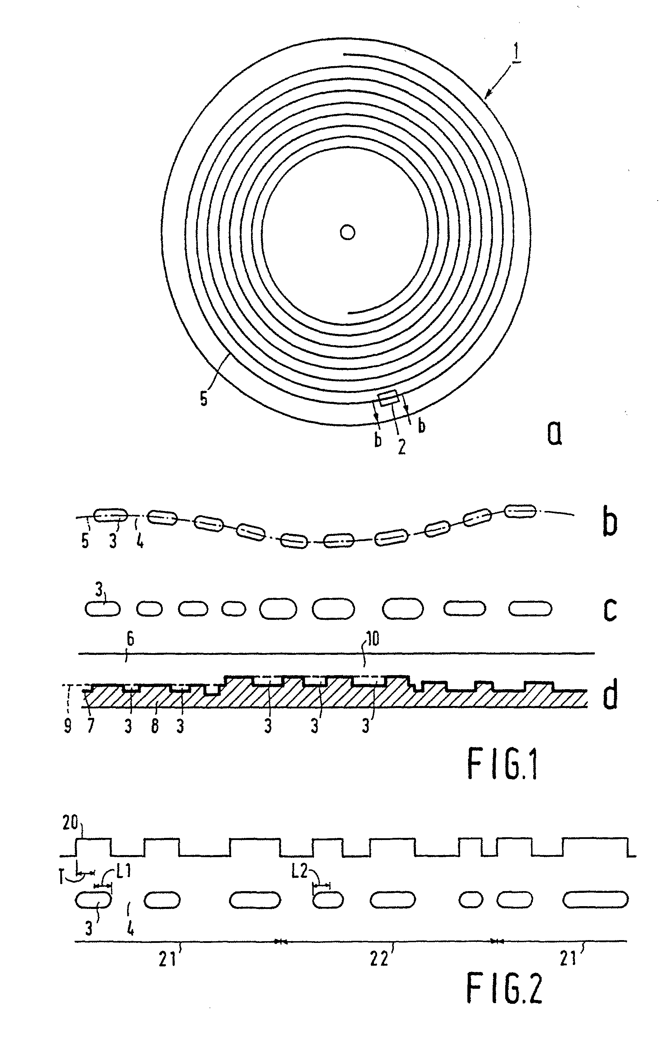

Figure 1 shows possible embodiments of a record carrier 1 for use in the information system in accordance with the invention, Figure la being a plan view, Figure 1b and 1c being highly enlarged plan views of a part 2 of a first and second embodiment of the record carrier 1, and Figure 1d showing a small part of a sectional view of the part 2 along a line b-b of a third embodiment of the record carrier 1.

In the embodiment of the record carrier 1 shown in Figure 1b the variations in first physical parameters have the form of optical detectable marks 3 which alternate with intermediate areas 4. The optically detectable marks may be in the form of so-called pits. However also other type of optically detectable marks are suitable. The optically detectable marks are arranged along a track of which the centre line is indicated by a reference sign 5. In this embodiment the variation in the second physical parameter is a variation of the track position in a direction transverse to the track direction. This position variation has the form of a track undulation, also known as a radial track wobble. Such track wobble can easily be detected by the same beam scanning means as used for the detection of the optically detectable marks 3 as will be discussed in an other part of the description.

In the embodiment shown in Figure 1c the variations of the second physical parameter has the form of variations of the width of the optical detectable marks 3. The variations in the width of marks 3 result in a additional intensity modulation in a radiation beam scanning the track. Both the variations in the width of the marks 3 and the information can be recovered on the basis of the intensity modulation, provided that the frequency spectrum of the component caused by the pattern of marks does not overlap the frequency spectrum of the component caused by the mark width variations.

In Figure 1d the reference sign 6 indicates a transparent substrate. The substrate 6 is covered wit a reflective layer 7. The reflective layer 7 is covered by a protective layer 8. The substrate 6 is provided with optically detectable marks 3 in the form of pits. The variation in the second parameter are in the form of the variations of the position of the plane in which optically detectable marks 3 are situated. In Figure 1d different positions of these planes are indicated by lines 9 and 10. When scanning the pattern as shown in Figure 1d with a focused radiation beam the variations in the plane of the marks 3 result in a focus error which can be detected easily.

Figure 2 shows the pattern of optically marks 3 and intermediate areas 4 for a fourth embodiment of the record carrier 1 for use in the information system according to the invention. The lengths of the marks 3 and the intermediate areas 4 correspond with a plurality (including one) of bit cells of a signal 20 read from the record carrier. In figure 2 this signal 20 is shown for the event that the pattern of marks 3 and areas 4 is scanned with a constant linear velocity. The length T of a bit cell corresponds with the period T of the data clock of the signal. In the track parts indicated by reference sign 21 a bit cell is represented by a track part with a length L1, whilst in the track part indicated by reference sign 22 a bit cell is represented by a track part with a length L2, which is shorter than length L1. In other words the mean length of the marks 3 and areas 4 for the track parts 21 differs from the mean length of the marks 3 and areas 4 in the track parts 22. In the event that the track is scanned with a constant linear velocity and the data clock is recovered from the signal 20 read, the variation in the mean value of the length of the marks 3 and areas 4 results in a variation of the frequency of the recovered data clock.

Figure 3 shows a fifth embodiment of a record carrier for use in the information system according to the invention. In this embodiment the tracks are divided in groups a and b. The track pitch d1 in group a as well as the track pitch d2 of the tracks in group b is constant within the respective group. The track pitch d2, however, is greater than the track pitch d1. This difference in track pitch can be easily detected when the tracks are scanned by a radiation beam as is described in detail in GB-PS 1,516,285. The presence of the variations in the track pitch can be easily detected when a scanning beam is moved in radial direction over the record carrier 1.

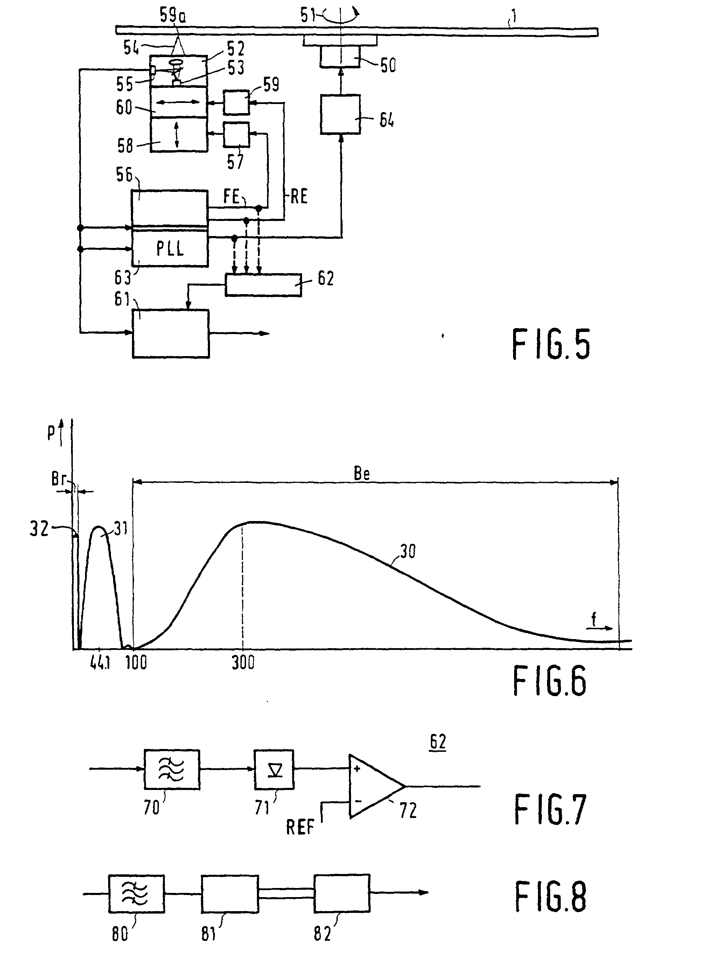

Figure 5 shows an embodiment of an optical information system in accordance with the invention in more detail.

The system is provided with a rotating drive motor 50 mechanically coupled with the record carrier 1 so as to cause a rotation of the record carrier about an axis 51. In doing so the record carrier is moved along a transducer in the form of an optical read head 52 of an usual type. The optical head 52 comprises a radiation source 53 for example in the form of a semiconductor laser for generating a laser beam 54. The beam 54 is directed by an optical system of an usual type to a radiation sensitive detector 55 via the record carrier 1. The laser beam is modulated in accordance with the variations of the first and second parameter. These modulations are detected by the detector 55 and detection signals corresponding to these modulations are available on output of the detector 55. The detection signals on the output of the detector 55 are supplied to a circuit 56 of a usual type which derives a focus error signal FE and an tracking error signal RE from these detection signals. The focus error signal FE is supplied to a focus control circuit 57 which derives from this focus error signal an energizing signal for an focus actuator 58 such that a focal point 59 of the beam 54 is maintained in a plane of the record carrier in which the optically detectably marks 3 are located. The detector 55 the circuit 56 the focus control circuit 57 and the focus actuator form a focus servo system of an usual type.

The tracking error signal RE is supplied to a tracking control circuit 59 which derives from the tracking error signal RE an energizing signal for a tracking actuator 60 arranged to move the beam 54 in radial direction in response to the energizing signal so as to maintain the beam substantially directed to the centre of the track 5. The detector 55, the circuit 56 and the tracking control circuit form a tracking servo system of usual type. The detection signals on the output of the detector are also supplied to an information recovery circuit 61.

Further the playback apparatus is provided with scanning velocity control means for maintaining the scanning velocity on a substantial constant value. The scanning velocity control means may comprise a circuit 63, for example a phase locked loop circuit of an usual type, for recovering the data clock from the detection signals on the output of the detector 55. The frequency of the data clock is a measure for the scanning velocity. A signal indicating the data clock frequency is supplied to a motor control circuit 64 for energizing the motor 50 such that the frequency of the recovered data clock is maintained on a substantial constant value. It is to be noted that the scanning velocity servo system can also be realised in other manners, for example as often realized in compact disc players on the basis of the filling grade of a so-called FIFO-buffer in which the information read out is temporarily stored.

In the event that the record carrier 1 is of the type as shown in Figure 1b the tracking error signal exhibit a signal component which is caused by the radial wobble. For a detailed explanation of this phenomena reference is made to EP-A-0,299,573 and EP-A-0,325,330. The frequency of the radial wobble should be selected such that the frequency of the signal component caused by the wobble is situated outside the bandwidth of the tracking servo loop and outside the frequency spectrum of the information. Figure 6 shows as illustration the position of the frequency spectrum 31 of the signal component caused by the radial wobble situated between the bandwidth 32 of the tracking servo and the frequency spectrum 30 of the information recorded on the record carrier.

The signal component in the tracking error signal RE caused by the radial wobble is detected by a detection circuit 62. This detection circuit 62 may be of a type as disclosed in detail in the documents EP-A-0,299,573 and EP-A-0,325,330.

The radial wobble may be a wobble with a constant frequency and constant amplitude. In that case the detection circuit may be of a type as shown in Figure 7. The detection circuit shown in Figure 7 comprises a band pass filter 70 tuned to the frequency of the signal component caused by the radial wobble. The input of the band pass filter 70 is coupled to the circuit 56 so as to receive the tracking error signal RE. The output of the band filter 70 is coupled to an input of a rectifying circuit 71 for rectifying the signal component filtered out by the filter 70. The rectified signal component is supplied to a comparator 72 for comparing the rectified signal with a reference value REF.

In the event that the rectified component exceeds the reference value REF the comparator generates an enabling signal which is supplied to the information recovery circuit for enabling the recovery of the information from the detection signals on the output of the detector 55.

So only in the event that the detection circuit 62 detects a signal component of a predetermined frequency caused by the radial wobble the information recovery is enabled. In case of an absence of this component the information recovery is maintained disabled. This means that the information recorded on a record carrier without a radial wobble with said predetermined frequency cannot be recovered.

Instead of a radial wobble with a constant frequency and constant amplitude it is preferred to use radial wobbles which exhibit a modulation which represent a code. Such modulation may be of a type as for example as disclosed in EP-A-0,299,573 or a FM-modulation as disclosed in EP-A-0,325,330.

In the event that a modulated radial wobble is used the detection circuit 62 may be of a type as disclosed in the said EP-documents. Figure 8 shows in principle such type of detection circuit 62. This detection circuit comprises a band pass filter 80 tuned to the frequency of the radial wobble. The input of the filter 80 is coupled to the circuit 56 so as to receive the tracking error signal RE. The output of the filter 80 is supplied to a demodulation circuit 81 for recovering the code represented by the modulated wobble. The code recovered by the demodulation circuit 81 is supplied to a comparator circuit 82 for comparing the code recovered with a predetermined code. The comparator circuit 82 is of a type that generates an enabling signal for the recovery circuit 61 in the event that the code recovered by the demodulation circuit 81 corresponds with the said predetermined code.

The information recovery circuit 61 may be of an usual type which may be enabled by means of an enabling signal.

It may be preferably to record encrypted or scrambled information on the record carrier which can only be recovered using a predetermined encryption or descrambling key code. In that event it is preferred to represent the descrambling or encryption code by the modulation of the track wobble. The information recovery circuit should then provided with a descrambling or a de-encryption circuit for de-encrypt or descramble the information using the code directly received from the demodulation circuit 81. An example of such information recovery circuit is shown in Figure 9, which information recovery circuit comprises a demodulation and error correction circuit 90 of an usual type for the recovery of information which has been encoded for example in accordance with a Compact Disc standard. The output signal of the circuit 90 is supplied to a descrambling or de-encryption circuit 91 of an usual type which descrambles or de-encrypts the information in conformity of the code directly received from the demodulation circuit 81.

For copying Compact Discs often a so-called recordable Compact Disc is used which is provided with a pregroove exhibiting a radial wobble which cause a signal component in the radial error signal with a frequency which substantially corresponds with a value of 22 kHz when the record carrier is scanned with a nominal scanning velocity of 1.2 to 1.4 meter per second. Said recordable Compact Disc is in detail disclosed in EP-A-0,325,330 already mentioned.

In order to prevent that a radial wobble copied from a Compact disc with a modulate radial wobble it is preferred that the radial wobble on the compact Disc to be copied has a frequency which substantially corresponds with the frequency of the radial wobble of the pregroove on the recordable Compact Disc. In that case the frequency spectra of both wobbles overlap and the wobbles cannot be distinguished from one another any more.

The embodiments described in the preceding are suitable to be used in combination of record carriers which exhibit a track wobble as shown in figure 1b.

The same circuitry can be used in the event that a record carrier is used as shown in Figure 1d. When using that type of record carrier a signal component in the focus error signal is caused in stead of in the tracking error signal. In that case the focus error signal should be supplied to the detection circuit 62 in stead of the tracking error signal RE.

In the event that a record carrier is used of a type as shown in Figure 2 the frequency of the data clock recovered by circuit 63 exhibits variations. In that event a signal indicative of these variations in the data clock frequency should be supplied to the detection circuit 62.

The detector 55 , the circuit 63, the motor circuit 64 and the motor 50 form a scanning velocity control system. For a proper operation the variations in the data clock frequency should be situated outside the bandwidth of the scanning velocity servo. In the preceding the invention is described for use in combination of optical information systems. However it is to be noted that in principle the invention is also applicable or other type of information systems such as magnetic information systems. In such systems a magnetic record carrier may be provided with a wobbling track. Both the magnetic information pattern and the track wobble can be detected by the same magnetic read head.

## Claims

1. Playback apparatus for recovering information from a record carrier, the record carrier comprising marks arranged along a track constituted by first variations of a first physical parameter of the record carrier, said marks representing information recorded on the record carrier, the apparatus comprising
- a transducing means (41;52-55) for scanning the record carrier (1) and generating at least one detection signal that exhibits first signal variations in dependence on said first variations,
- recovery means (42;61) for recovering the information from said first signal variations, and
- disabling means (44;82) for controlling said recovery means to recover the information in dependence on the detection signal,
**characterized in that** the apparatus comprises
detection means (43;62;81) for generating an output signal based on second signal variations by detecting second variations of a second physical parameter of the mark the second variations being provided for constituting a track modulation, the second physical parameter being a dimension of the marks or a position of the marks with reference to a position of the track without the track modulation, at a frequency spectrum which is located substantially outside the frequency spectrum of the first signal variations, said second variations of the second physical parameter differing from said first variations of the first physical parameter and the output signal being coupled to the disabling means (44;82).

2. Playback apparatus as claimed in claim 1, **characterized in that** the detection means comprise demodulation means (71,81) for recovering a code from the second signal variations and means (62,82) for activating the disabling means in response to the recovery of said code.

3. Playback apparatus as claimed in claim 2, **characterized in that** the apparatus is provided with means for setting the recovery means (42,62) in a mode in which a predetermined data processing indicated by the code recovered is performed.

4. Playback apparatus as claimed in claim 2, **characterized in that** the disabling means comprise means (91) for descrambling or de-encrypting the information using the code.

5. Playback apparatus as claimed in any one of the claims 1, 2 or 3, **characterized in that** the transducing means comprise a radiation sensitive detector (55) and means (53,58,60) for directing a radiation beam on the radiation sensitive detector via the record carrier.

6. Playback apparatus as claimed in claim 5, **characterized in that** the transducing means comprise means (56) for generating a second one of the at least one detection signal, the second detection signal exhibiting the second signal variations and being separate from the detection signal that exhibits the first signal variations.

7. Playback apparatus as claimed in claim 5 or 6, **characterized in that** the apparatus comprises servo control means (57,59,64) for controlling the scanning in order to control at least one scanning parameter to a predetermined value on the basis the detection signal, the detection means (62) being arranged to detect the presence of the second variations in the detection signal.

8. Playback apparatus as claimed in claim 7, **characterized in that** the servo control means comprise tracking control means (59,60) for controlling the tracking on the basis of a tracking error signal derived from the detection signal.

9. Playback apparatus as claimed in claim 7, **characterized in that** the servo control means comprises scanning speed control means (64,50), the playback apparatus further comprising means (63) for data clock recovery, the detection means (62) comprises means for detecting variations in the clock frequency.

10. Playback apparatus as claimed in claim 7, **characterized in that** the servo control means comprises focus control means (57,58) for maintaining a focal point of the radiation beam substantially in the plane in which optically detectable areas and intermediate areas constituting the marks are located on the basis of an focus error signal derived from the detection signal.

11. Record carrier comprising marks arranged along a track constituted by first variations of a first physical parameter of the record carrier, said marks representing information recorded on the record carrier, **characterized in that**
the marks have, for constituting a track modulation, second variations of a second physical parameter, the second physical parameter being a dimension of the marks or a position of the marks with reference to a position of the track without the track modulation at a frequency spectrum which is located substantially outside the frequency spectrum of the first variations, said second variations of the second physical parameter differing from said first variations of the first physical parameter.

12. Record carrier as claimed in claim 11, wherein the second variations exhibit a variation pattern representing a code for controlling the recovery of the recorded information.

13. Record carrier as claimed in claim 12, **characterized in that** the information recorded is of a type which is recoverable by means of a predetermined data processing, the code indicating the type of data processing to be used for recovering the information.

14. Record carrier as claimed in claim 12, **characterized in that** the code is an encryption code or a descrambling code.

15. Record carrier as claimed in claim 11 or 12, **characterized in that** said record carrier is of an optical readable type, in which the information has been recorded as a pattern of optically detectable marks arranged along a track.

16. Record carrier as claimed in claim 11, **characterized in that** the second variations are variations of a radial position of the marks in a direction transverse to the track direction.

17. Record carrier as claimed in claim 11, **characterized in that** the second variations are variations in the mean value of the length of the marks, in particular the marks being constituted by optically detectable areas and intermediate areas.

18. Record carrier as claimed in claim 11, **characterized** that the second variations are variations in the position of a plane in which said marks are situated.

19. Record carrier as claimed in one of the claims 11, 16, 17 or 18, **characterized in that** the record carrier is a Compact Disc, and that the second variations result in second signal variations with a frequency substantially corresponding to 22 kHz in the event that the track is scanned with a scanning speed between 1.2 to 1.4 meter per second.

## Patentansprüche

1. Abspielgerät zum Rückgewinnen von Informationen aus einem Aufzeichnungsträger, wobei der Aufzeichnungsträger entlang einer Spur angeordnete Marken umfasst, die von ersten Änderungen eines ersten physikalischen Parameters des Aufzeichnungsträgers gebildet worden sind, wobei die genannten Marken auf dem Aufzeichnungsträger aufgezeichneten Informationen entsprechen, wobei das Gerät umfasst:
- ein Wandlermittel (41; 52-55) zum Abtasten des Aufzeichnungsträgers (1) und zum Generieren zumindest eines Detektionssignals, das erste Signaländerungen in Abhängigkeit von den genannten ersten Änderungen aufweist,
- Rückgewinnungsmittel (42; 61) zum Rückgewinnen der Informationen aus den genannten ersten Änderungen und
- Deaktivierungsmittel (44;82) zum Steuern der genannten Rückgewinnungsmittel zum Rückgewinnen der Informationen in Abhängigkeit vom Detektionssignal,
**dadurch gekennzeichnet, dass** das Gerät umfasst
- Detektionsmittel (43; 62; 81) zum Generieren eines auf zweiten Signaländerungen beruhenden Ausgangssignals durch Detektion von zweiten Änderungen eines zweiten physikalischen Parameters der Marken, wobei die zweiten Änderungen vorgesehen sind, um eine Spurmodulation zu bilden, wobei der zweite physikalische Parameter eine Abmessung der Marken oder eine Position der Marken in Bezug auf eine Position der Spur ohne die Spurmodulation ist, bei einem Frequenzspektrum, das im Wesentlichen außerhalb des Frequenzspektrums der ersten Signaländerungen liegt, wobei sich die genannten zweiten Änderungen des zweiten physikalischen Parameters von den genannten ersten Änderungen des ersten physikalischen Parameters unterscheiden und das Ausgangssignal mit den Deaktivierungsmitteln (44; 82) gekoppelt ist.

2. Abspielgerät nach Anspruch 1, **dadurch gekennzeichnet, dass** das Detektionsmittel Demodulationsmittel (71, 81) zum Rückgewinnen eines Codes aus den zweiten Signaländerungen und Mittel (62, 82) zum Aktivieren der Deaktivierungsmittel in Reaktion auf die Rückgewinnung des genannten Codes umfasst.

3. Abspielgerät nach Anspruch 2 , **dadurch gekennzeichnet, dass** das Gerät mit Mitteln zum Setzen der Rückgewinnungsmittel (42, 62) in einen Modus versehen ist, in dem eine von dem rückgewonnenen Code angegebene, zuvor bestimmte Datenverarbeitung ausgeführt wird.

4. Abspielgerät nach Anspruch 2 , **dadurch gekennzeichnet, dass** die Deaktivierungsmittel Mittel (91) zum Entwürfeln oder Entschlüsseln der Informationen bei Verwendung des Codes umfasst.

5. Abspielgerät nach einem der Ansprüche 1, 2 oder 3, **dadurch gekennzeichnet, dass** die Wandlermittel einen strahlungsempfindlichen Detektor (55) umfassen sowie Mittel (53, 58, 60), um ein Strahlenbündel über den Aufzeichnungsträger auf den strahlungsempfindlichen Detektor zu richten.

6. Abspielgerät nach Anspruch 5, **dadurch gekennzeichnet, dass** die Wandlermittel Mittel (56) zum Generieren eines zweiten des zumindest einen Detektionssignals umfassen, wobei das zweite Detektionssignal die zweiten Signaländerungen aufweist und von dem Detektionssignal, das die ersten Signaländerungen aufweist, getrennt ist.

7. Abspielgerät nach Anspruch 5 oder 6, **dadurch gekennzeichnet, dass** das Gerät Servosteuerungsmittel (57, 59, 64) zum Steuern des Abtastens hat, um zumindest einen Abtastparameter auf Basis des Detektionssignals auf einen zuvor bestimmten Wert zu regeln, wobei die Detektionsmittel (62) zum Detektieren des Vorhandenseins der zweiten Änderungen im Detektionssignal ausgebildet sind.

8. Abspielgerät nach Anspruch 7, **dadurch gekennzeichnet, dass** die Servosteuerungsmittel Spurfolgesteuerungsmittel (59, 60) umfassen, zum Steuern der Spurfolge auf Basis eines aus dem Detektionssignal abgeleiteten Spurfolgefehlersignals.

9. Abspielgerät nach Anspruch 7, **dadurch gekennzeichnet, dass** das Servosteuerungsmittel Abtastgeschwindigkeitssteuerungsmittel (64, 50) umfasst, wobei das Abspielgerät weiter Mittel (63) zur Datentaktrückgewinnung umfasst, und das Detektionsmittel (62) Mittel zum Detektieren von Änderungen der Taktfrequenz umfasst.

10. Abspielgerät nach Anspruch 7, **dadurch gekennzeichnet, dass** das Servosteuerungsmittel Fokussteuerungsmittel (57, 58) umfasst, um auf Basis eines aus dem Detektionssignal abgeleiteten Fokusfehlersignals einen Fokus des Abtaststrahlenbündels nahezu in der Ebene zu halten, in der optisch detektierbare Gebiete und Zwischengebiete liegen, die die Marken bilden.

11. Aufzeichnungsträger mit entlang einer Spur angeordnete Marken, die von ersten Änderungen eines ersten physikalischen Parameters des Aufzeichnungsträgers gebildet worden sind, wobei die genannten Marken auf dem Aufzeichnungsträger aufgezeichneten Informationen entsprechen, **dadurch gekennzeichnet, dass** die Marken zweite Änderungen eines zweien physikalischen Parameters aufweisen, um eine Spurmodulation zu bilden, wobei der zweite physikalische Parameter eine Abmessung der Marken oder eine Position der Marken in Bezug auf eine Position der Spur ohne die Spurmodulation ist,
bei einem Frequenzspektrum, das im Wesentlichen außerhalb des Frequenzspektrums der ersten Änderungen liegt, wobei sich die genannten zweiten Änderungen des zweiten physikalischen Parameters von den genannten ersten Änderungen des ersten physikalischen Parameters unterscheiden.

12. Aufzeichnungsträger nach Anspruch 11, wobei die zweiten Änderungen ein Änderungsmuster aufweisen, das einen Code zum Steuern der Rückgewinnung der aufgezeichneten Information repräsentiert.

13. Aufzeichnungsträger nach Anspruch 12, **dadurch gekennzeichnet, dass** die aufgezeichnete Information von einer Art ist, die mit einer zuvor bestimmten Datenverarbeitung zurückgewonnen werden kann, wobei der Code die Art der zu verwendenden Datenverarbeitung zum Rückgewinnen der Informationen anzeigt.

14. Aufzeichnungsträger nach Anspruch 12, **dadurch gekennzeichnet, dass** der Code ein Verschlüsselungscode oder ein Entwürfelungscode ist.

15. Aufzeichnungsträger nach Anspruch 11 oder 12, **dadurch gekennzeichnet, dass** der genannte Aufzeichnungsträger von einem optisch lesbaren Typ ist, in dem die Informationen als Muster aus entlang einer Spur angeordneten, optisch detektierbaren Marken aufgezeichnet sind.

16. Aufzeichnungsträger nach Anspruch 11, **dadurch gekennzeichnet, dass** die zweiten Änderungen Änderungen einer radialen Position der Marken in einer Richtung quer zur Spurrichtung sind.

17. Aufzeichnungsträger nach Anspruch 11, **dadurch gekennzeichnet, dass** die zweiten Änderungen Änderungen des Mittelwertes der Länge der Marken sind, wobei insbesondere die Marken durch optisch detektierbare Gebiete und Zwischengebiete gebildet sind.

18. Aufzeichnungsträger nach Anspruch 11, **dadurch gekennzeichnet, dass** die zweiten Änderungen Änderungen der Position einer Ebene sind, in der die genannten Marken liegen.

19. Aufzeichnungsträger nach einem der Ansprüche 11, 16, 17 oder 18, **dadurch gekennzeichnet, dass** der Aufzeichnungsträger eine Compact Disc ist und dass die zweiten Änderungen für den Fall, dass die Spur mit einer Abtastgeschwindigkeit zwischen 1,2 und 1,4 Meter pro Sekunde abgetastet wird, zu zweiten Signaländerungen mit einer Frequenz führen, die nahezu 22 kHz entspricht.

## Revendications

1. Appareil de reproduction pour restituer des informations à partir d'un support d'enregistrement, le support d'enregistrement comprenant des repères étant agencés le long d'une piste qui est constituée par des premières variations d'un premier paramètre physique du support d'enregistrement, lesdits repères représentant des informations qui sont enregistrées sur le support d'enregistrement, l'appareil comprenant
- des moyens transducteurs (41; 52 à 55) pour balayer le support d'enregistrement (1) et pour produire au moins un signal de détection qui présente des premières variations de signal dépendamment desdites premières variations,
- des moyens de restitution (42, 61) pour restituer les informations à partir desdites premières variations de signal, et
- des moyens de désactivation (44; 82) pour commander lesdits moyens de restitution pour restituer les informations dépendamment du signal de détection,
**caractérisé en ce que** l'appareil comprend
des moyens de détection (43; 62; 81) pour produire un signal de sortie sur la base de deuxièmes variations de signal en détectant des deuxièmes variations d'un deuxième paramètre physique des repères qui sont prévus pour constituer une modulation de piste, le deuxième paramètre physique étant une dimension des repères ou une position des repères avec référence à une position de la piste sans la modulation de piste, les deuxièmes variations se trouvant à l'endroit d'un spectre de fréquences qui se situe sensiblement en dehors du spectre de fréquences des premières variations de signal, lesdites deuxièmes variations du deuxième paramètre physique étant différentes desdites premières variations du premier paramètre physique et le signal de sortie étant couplé aux moyens de désactivation (44; 82).

2. Appareil de reproduction selon la revendication 1, **caractérisé en ce que** les moyens de détection comprennent des moyens de démodulation (71, 81 ) pour restituer un code à partir des deuxièmes variations de signal et des moyens (62, 82) pour activer des moyens de désactivation en réaction à la restitution dudit code.

3. Appareil de reproduction selon la revendication 2, **caractérisé en ce que** l'appareil est pourvu de moyens pour fixer les moyens de restitution (42, 62) dans un mode dans lequel un traitement de données prédéterminé qui est indiqué par le code restitué est effectué.

4. Appareil de reproduction selon la revendication 2, **caractérisé en ce que** les moyens de désactivation comprennent des moyens (91) pour désembrouiller ou pour décrypter les informations à l'aide du code.

5. Appareil de reproduction selon l'une quelconque des revendications précédentes 1, 2 ou 3, **caractérisé en ce que** les moyens transducteurs comprennent un détecteur sensible au rayonnement (55) et des moyens (53, 58, 60) pour diriger un faisceau de rayonnement vers le détecteur sensible au rayonnement par l'intermédiaire du support d'enregistrement.

6. Appareil de reproduction selon la revendication 5, **caractérisé en ce que** les moyens transducteurs comprennent des moyens (56) pour produire un deuxième du au moins un signal de détection, le deuxième signal de détection présentant les deuxièmes variations de signal et étant séparé du signal de détection qui présente les premières variations de signal.

7. Appareil de reproduction selon la revendication 5 ou 6, **caractérisé en ce que** l'appareil comprend des moyens de servocommande (57, 59, 64) pour commander le balayage afin de commander au moins un paramètre de balayage à une valeur prédéterminée sur la base du signal de détection, les moyens de détection (62) étant agencés de manière à détecter la présence des deuxièmes variations du signal de détection.

8. Dispositif de reproduction selon la revendication 7, **caractérisé en ce que** les moyens de servocommande comprennent des moyens de commande de poursuite (59, 60) pour commander la poursuite sur la base d'un signal d'erreur de poursuite qui est dérivé à partir du signal de détection.

9. Dispositif de reproduction selon la revendication 7, **caractérisé en ce que** les moyens de servocommande comprennent des moyens de commande de vitesse de balayage (64, 50), l'appareil de reproduction comprenant encore des moyens (63) pour la restitution d'horloge de données, les moyens de détection (62) comprenant des moyens pour détecter des variations de la fréquence d'horloge.

10. Appareil de reproduction selon la revendication 7, **caractérisé en ce que** les moyens de servocommande comprennent des moyens de commande de focalisation (57, 58) pour maintenir un foyer du faisceau de rayonnement sensiblement dans le plan dans lequel des zones détectables par voie optique et des zones intermédiaires constituant les repères se situant sur la base d'un signal d'erreur de focalisation qui est dérivé à partir du signal de détection.

11. Support d'enregistrement comprenant des repères étant agencés le long d'une piste qui est constituée par des premières variations d'un premier paramètre physique du support d'enregistrement, lesdits repères représentant des informations qui sont enregistrées sur le support d'enregistrement, **caractérisé en ce que** les repères présentent, pour constituer une modulation de piste, des deuxièmes variations d'un deuxième paramètre physique, le deuxième paramètre physique étant une dimension des repères ou une position des repères avec référence à une position de la piste sans la modulation de piste, les deuxièmes variations se trouvant à l'endroit d'un spectre de fréquences qui se trouve sensiblement en dehors du spectre de fréquences des premières variations, lesdites deuxièmes variations du deuxième paramètre physique étant différentes desdites premières variations dudit premier paramètre physique.

12. Support d'enregistrement selon la revendication 11, dans lequel les deuxièmes variations présentent un motif de variation représentant un code pour commander la restitution des informations enregistrées.

13. Support d'enregistrement selon la revendication 12, **caractérisé en ce que** les informations enregistrées sont d'un type qui peut être restitué au moyen d'un traitement de données prédéterminé, le code indiquant le type de traitement de données à utiliser pour restituer les informations.

14. Support d'enregistrement selon la revendication 12, **caractérisé en ce que** le code est un code de cryptage ou un code de désembrouillage.

15. Support d'enregistrement selon la revendication 11 ou 12, **caractérisé en ce que** ledit support d'enregistrement est d'un type lisible par voie optique dans lequel les informations ont été enregistrées en tant qu'un motif de repères détectables par voie optique qui sont agencés le long d'une piste.

16. Support d'enregistrement selon la revendication 11, **caractérisé en ce que** les deuxièmes variations sont des variations d'une position radiale des repères dans une direction qui est transversale à la direction de la piste.

17. Support d'enregistrement selon la revendication 11, **caractérisé en ce que** les deuxièmes variations sont des variations de la valeur moyenne de la longueur des repères, en particulier les repères étant constitués par des zones détectables par voie optique et par des zones intermédiaires.

18. Support d'enregistrement selon la revendication 11, **caractérisé en ce que** les deuxièmes variations sont des variations de la position d'un plan dans lequel se trouvent lesdits repères.

19. Support d'enregistrement selon l'une quelconque des revendications précédentes 11, 16, 17 ou 18, **caractérisé en ce que** le support d'enregistrement est un disque compact et **en ce que** les deuxièmes variations aboutissent à des deuxièmes variations de signal avec une fréquence correspondant à 22 kHz dans l'éventualité où la piste est balayée à une vitesse de balayage dans la gamme comprise entre 1,2 et 1,4 mètre par seconde.
